# EUROPEAN PATENT APPLICATION

(11) **EP 1 748 639 A1**
(43) Date of publication of application: **31.01.2007**
(21) Application number: 06117460.3
(22) Date of filing: 19.07.2006
(51) Int. Cl.: H04N 1/21

(54) **Image Processing Apparatus, Image Processing Method, and Image Processing Program**

(30) Priority: 29.07.2005 JP 2005221145
(71) Applicant: Ricoh Company, Ltd., Tokyo 143-8555 (JP)
(72) Inventor: Yano, Tomoaki, c/o Ricoh Company Ltd., Yokohama-shi, Kanagawa (JP); Furuichi, Yoshinori, Yokohama-shi, Kanagawa (JP); Kakoi, Akihiro, Yokohama-shi, Kanagawa (JP); Nakamura, Rie, Tokyo (JP); Asakawa, Tetsuo, Tokyo (JP); Kouchi, Miki, c/o Ricoh Company Ltd., Kawasaki-shi, Kanagawa (JP)
(74) Representative: Schwabe - Sandmair - Marx

(57) **Abstract**

An image processing apparatus having an interface (14) with a removable medium (13) is disclosed. The image processing apparatus includes an image data input part configured to input image data, an image processing part (8) configured to process the input image data, an image data storing part configured to store the processed image data in the removable medium, and an image data output part configured to output the stored image data.

## Description

### BACKGROUND OF THE INVENTION

### 1. Field of the Invention

The present invention relates to an image processing apparatus having an interface with a removable medium, an image processing method, and an image processing program.

### 2. Description of the Related Art

In recent years and continuing, a multi-function imaging apparatus having plural functions including a facsimile function, a copying function, and a printing function, for example, is becoming widespread.

In general, basic operations of such an imaging apparatus include processing input image data and outputting the processed image data. In this case, image data processing and input/output control operations are performed via a data buffer memory. In many instances, the overall functions and capabilities of an image processing apparatus are controlled by the capacity of the buffer memory. Such an arrangement is implemented in order to facilitate product line development, for example.

In this case, the maximum functions and capabilities of an image processing apparatus with a given configuration may be obtained by assigning to the buffer memory a capacity adequate for achieving the desired image processing capabilities.

It is noted that increasing the memory capacity leads to cost increase, and in turn, techniques have been developed involving the use of a large capacity external storage device such as a magnetic disk or an optical disk as an image buffer. However, advantageous effects from using such detachable external storage devices have not yet been realized.

### SUMMARY OF THE INVENTION

According to one aspect of the present invention, a technique is provided for controlling the use of memory resources of a built-in memory of an image processing apparatus having an interface with a removable medium.

According to one embodiment of the present invention, an image processing apparatus having an interface with a removable medium is provided, the apparatus including:
an image data input part configured to input image data;
an image processing part configured to process the input image data;
an image data storing part configured to store the processed image data in the removable medium; and
an image data output part configured to output the stored image data.

In one preferred embodiment, the image processing part processes the input image data into print data.

In another preferred embodiment, the image data input part is a scanner.

In another preferred embodiment, the image data input part is an interface with an external host apparatus, and the image data are transmitted from the external host apparatus.

In another preferred embodiment, the image data output part is a printer.

In another preferred embodiment, the image data output part is an interface with an external host apparatus, and the image data are output to the external host apparatus.

In another preferred embodiment, the image processing apparatus of the present invention further includes:
a built-in storage part; and
a setting part configured to set information pertaining to whether the processed image data are to be stored in the removable medium or the built-in storage part.

According to another embodiment of the present invention, an image processing method is provided for processing image data in an image processing apparatus having an interface with a removable medium, the method including:
an image data input step for inputting the image data;
an image processing step for processing the input image data;
an image data storing step for storing the processed image data in the removable storage medium; and
an image data outputting step for outputting the stored image data.

According to another embodiment of the present invention, a computer-readable medium storing an image processing program is provided, the program being executed by a computerized device included in an image processing apparatus having an interface with a removable medium to perform the steps of the image processing method according to an embodiment of the present invention.

### BRIEF DESCRIPTION OF THE DRAWINGS

FIG.1 is a block diagram showing a basic configuration of an image processing apparatus according to an embodiment of the present invention;
FIGS. 2A-2E are diagrams illustrating exemplary data flows in operations of the image processing apparatus of FIG. 1;
FIGS. 3A and 3B are diagrams illustrating exemplary data flows in operations involving use of a removable medium;
FIG. 4 is a block diagram illustrating a configuration for changing a storage destination; and
FIG. 5 is a flowchart illustrating an interruption generating process executed by a medium control unit.

### DESCRIPTION OF THE PREFERRED EMBODIMENTS

In the following, preferred embodiments of the present invention are described with reference to the accompanying drawings.

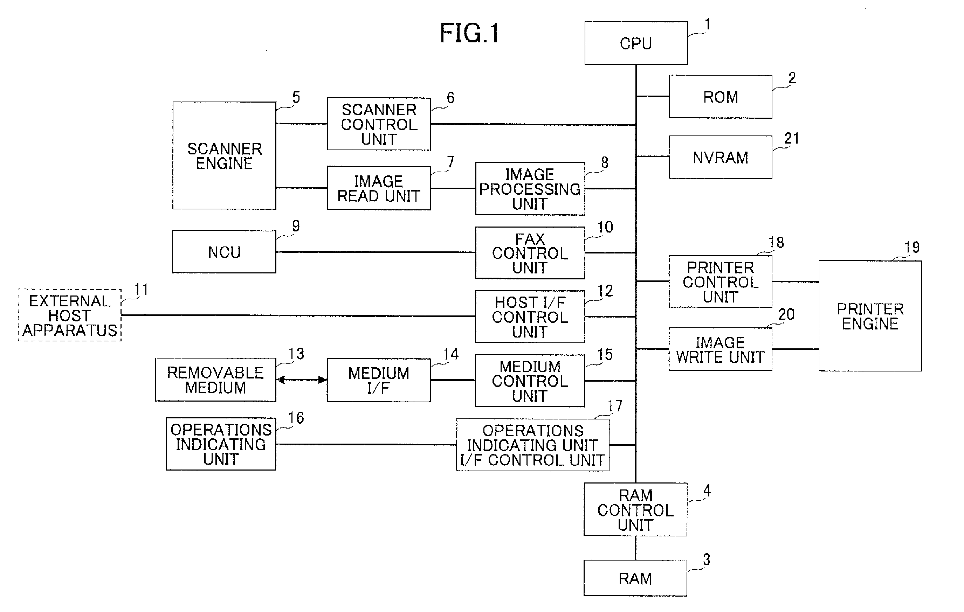

FIG. 1 is a block diagram showing a basic configuration of an image processing apparatus according to an embodiment of the present invention. It is noted that the illustrated image processing apparatus performs copying, printing, scanning, and fax functions. The illustrated image processing apparatus includes a CPU 1, a ROM 2, a RAM 3, a RAM control unit 4, a scanner engine 5, a scanner control unit 6, an image read unit 7, an image processing unit 8, a NCU 9, a fax control unit 10, a host I/F (interface) control unit 12, a medium I/F 14, a medium control unit 15, an operations indicating unit 16, an operations indicating unit I/F control unit 17, a printer control unit 18, a printer engine 19, an image write unit 20, and a NVRAM (nonvolatile RAM) 21.

In the following, scanning functions of the present image processing apparatus are described. The scanner engine 5 is configured to read a document for copying and scanning, for example. The scanner control unit is configured to control the scanner engine 5. The image read unit 7 is configured to input image data that are output from the scanner engine 5. The image processing unit 8 is configured to process the input image data.

It is noted that image data may be input to the present image processing apparatus from an external host apparatus 11. The host I/F (interface) control unit 12 corresponds to input means for inputting the image data from the external host apparatus 11. It is noted that the host I/F of the present image processing apparatus for connecting with the external host apparatus 11 may be any type of connection including local connections conforming to the IEEE 1284 or USB standard, for example, and wired or wireless network connections such as the Ethernet (registered trademark).

The image processing apparatus of the present embodiment may be connected to a removable medium 13 via the medium I/F 14. It is noted that the removable medium 13 may be a CF (compact flash (registered trademark)), an SD card (registered trademark), an MMC (multimedia card), a memory stick (registered trademark), a USB memory, a CD, or a DVD, for example. However, the type of medium used as the removable medium 13 is by no way limited to the above examples.

The removable medium 13 is supported by the medium I/F 14, and the medium I/F 14 is configured to realize physical connection such as electrical connection or optical connection with the removable medium 13. The medium control unit 15 is configured to perform control operations for establishing data communication with various types of removable media. It is noted that the present image processing apparatus has the so-called direct print function for directly printing image data stored in the removable medium 13 (e.g., without using a computer).

In the following, fax functions of the present image processing apparatus are described. It is noted that image data input is performed by the scanner engine 5 and the external host apparatus 11 in executing fax functions. The fax control unit 10 is configured to encode image data to be transmitted into a format adapted for facsimile transmission and transmit the encoded image data via a NCU (network control unit) 9 that is connected to a public circuit. Also, the fax control unit 10 is configured to decode received image data.

The printer engine 19 is configured to print image data. It is noted that the printer engine 19 may perform imaging according to a laser printing scheme, an LED printing scheme, an inkjet printing scheme, or some other printing scheme, for example. The printer control unit 18 is configured to control the printer engine 19. The image write unit 20 is configured to input image data to be printed to the printer engine 19.

The CPU 1 is configured to control operations of the units of the present image processing apparatus and issue commands thereto, for example. The ROM 2 stores programs for executing the operations of the present image processing apparatus. It is noted that depending on system configurations, plural ROMs may preferably be installed in order to improve processing capabilities. The RAM 3 is used to temporarily store data generated in the processes executed by units of the present image processing apparatus. The RAM control unit 4 is configured to control the RAM 3. The NVRAM 21 is a nonvolatile memory that is used to store dedicated information for the apparatus (e.g., a counter value representing the number of copies). Also, the NVRAM 21 may be used for temporarily storing the transmission time of image data, for example.

The operations indicating unit 16 corresponds to one or more machine interfaces with the apparatus operator (user) such as buttons for executing machine operations and indicators (e.g., a display device such as a LED or LCD, and a speaker) for indicating information pertaining to the image processing apparatus. The operations indicating unit I/F control unit 17 controls input/output of information to/from the operations indicating unit 16. For example, information pertaining to the selection of a function to be used by a user (e.g., fax) may be input.

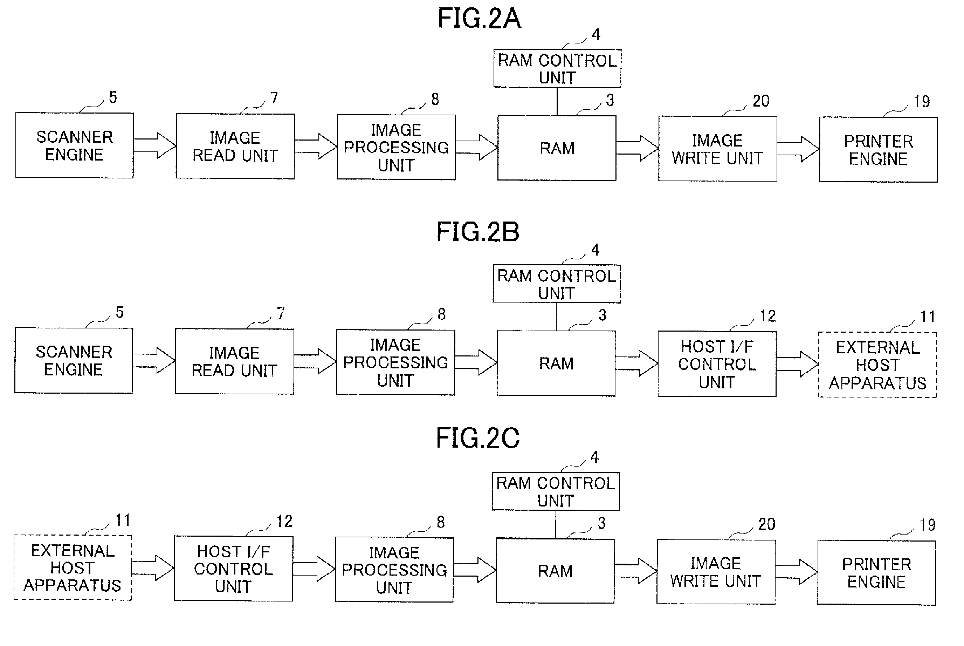

In the following, data flows in the present image processing apparatus are described with reference to FIGS. 2A-2D. FIG. 2A illustrates a general data flow in the case of executing copying operations. In this case, image data are read by the image read unit 7 from the scanner engine 5 and transmitted to the image processing unit 8 to be processed thereat after which the processed image data are temporarily stored in the RAM 3. Then, the processed image data are transmitted to the printer engine 19 by the image write unit 20 and output as printed matter from the image processing apparatus.

FIG. 2B illustrates a data flow in the case of executing scanning operations. In this case, as in the case of executing the copying operations, image data are read by the image read unit 7 from the scanner engine 5 and transmitted to the image processing unit 8 to be processed thereat (the actual image processes performed by the image processing unit 8 partially differ from those for the copying operations) after which the processed image data are temporarily stored in the RAM 3. Then, the processed image data are output to the external host apparatus 11 via the host I/F control unit 12. In this case, the host I/F may be an IEEE 1284 connection, a USB connection, or a network connection, for example.

FIG. 2C illustrates a data flow in the case of executing printing operations. In this case, image data are transmitted from the external host apparatus 11 and received at the host I/F control unit 12 after which the image data are processed by the image processing unit 8 to be temporarily stored at the RAM 3. According to certain embodiments, in a case where the image processing apparatus supports PDL (print description language) data, print data depiction processes based on PDL may be primarily performed as image processes of the image processing apparatus. On the other hand, in a case where the image processing apparatus does not support PDL data, data decompression of compressed data may be performed as the image processes, for example. The processed image data are transmitted to the printer engine 19 by the image write unit 20 to be output as printed matter from the image processing apparatus.

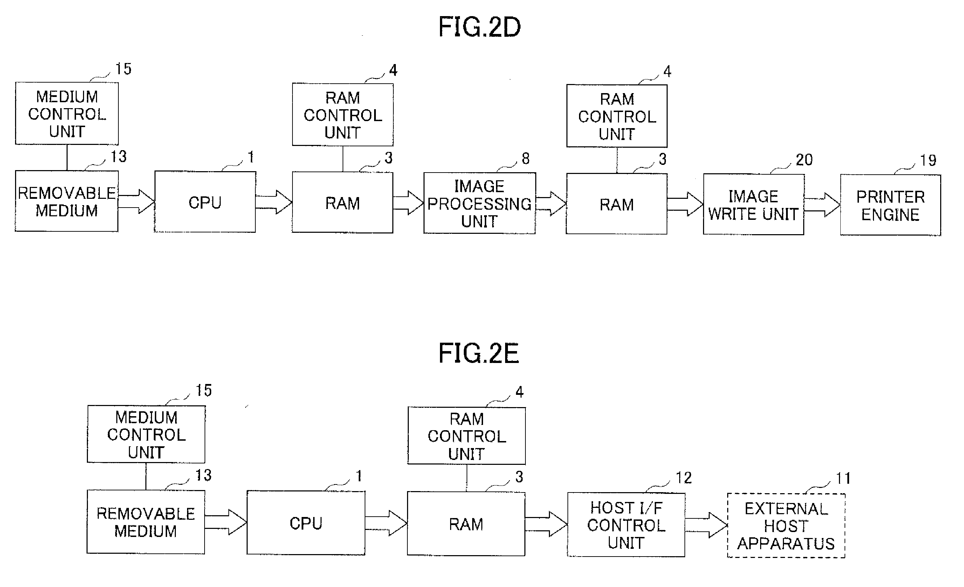

FIGS. 2D and 2E illustrate data flows in an apparatus having an interface with the removable medium 13. Specifically, FIG. 2D illustrates a data flow in a case of using the direct print function. As is described above, the direct print function does not require use of a host apparatus (e.g., computer).

In FIG. 2D, image data are read from the removable medium 13 by the CPU 1 and temporarily stored in the RAM 3. Then, the read image data are processed by the image processing unit 8 and the processed image data are returned to the RAM 3 to be temporarily stored therein. Then, the processed data are transmitted to the printer engine 19 by the image write unit 20 to be output as printed matter from the image processing apparatus.

FIG. 2E illustrates a data flow in a case of using communication functions of the present image processing apparatus to establish communications between the removable medium 13 and the host apparatus 11. In FIG. 2E, image data are read from the removable medium 13 by the CPU 1 and temporarily stored in the RAM 3. Then, the image data are output to the external host apparatus 11 via the host I/F control unit 12. It is noted that image processing functions of the image processing apparatus are not used in the data flow illustrated in FIG. 2E.

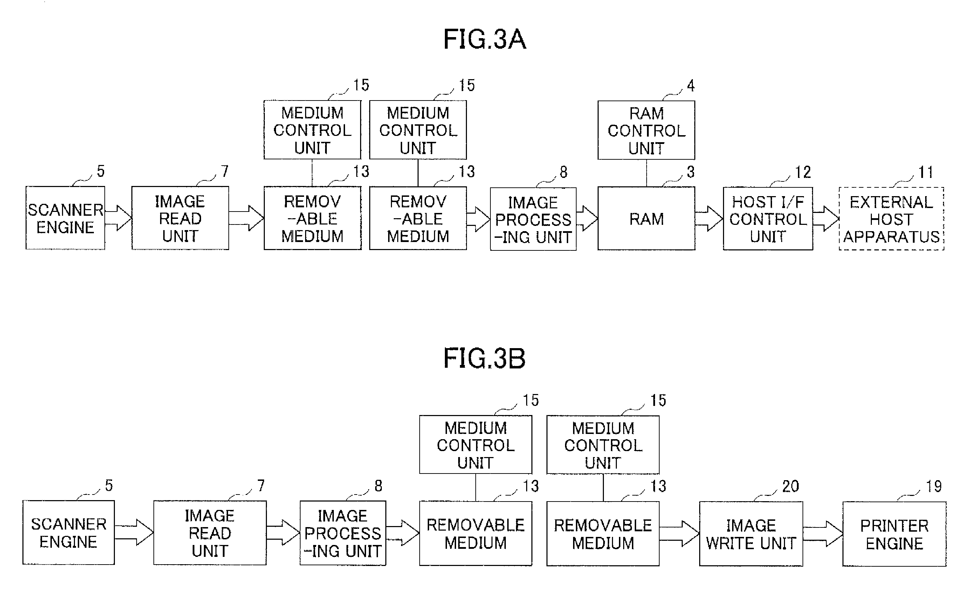

In the following, data flows in the process of inputting image data, processing the image data, storing the processed image data in a removable medium, and outputting the stored image data are described with reference to FIGS. 3A and 3B.

FIG. 3A illustrates a data flow in a case where a scanner provides the input and an external host apparatus receives the output. In this case, image data are transmitted from the scanner engine 5 to the image read unit 7 and stored in the removable medium 13. It is noted that the data flow is depicted as if it were terminating at this point in order to show that the removable medium 13 may be removed at the time the read image data are stored therein.

Then, the image data stored in the removable medium 13 are read and processed by the image processing unit 8 after which the processed image data are temporarily stored in the RAM 3. Then, the processed image data are output to the external host apparatus 11 via the host I/F control unit 12.

FIG. 3B illustrates a data flow realized in a case where a scanner provides the input and a printer prints the output. In this case, image data are transmitted from the scanner engine 5 via the image read unit 7 to the image processing unit 8 to be processed thereat. Then, the processed image data are stored in the removable medium 13. It is noted that the data flow is depicted as if it were terminating at this point in order to show that the removable medium 13 may be removed at the time the processed image data are stored therein.

Then, the processed image data stored in the removable medium 13 are read and temporarily stored in the RAM 3 after which the image data are transmitted to the printer engine 19 by the image write unit 20 to be output as printed matter from the image processing apparatus.

It is noted that the difference between the data flows of FIG. 2A-2E and the data flows of FIG. 3A and 3B is whether the RAM 3 or the removable medium 13 is used as the image buffer memory. In the case where the removable medium 13 is used, the memory capacity of the image buffer memory may not be restricted to a fixed capacity, intermediate image data that are stored in the removable medium 13 may be extracted, and the image buffer memory may be removed.

For example, in the case of FIG. 3B, the removable medium 13 removed after image data are stored therein may be used in another apparatus having an interface with the removable medium. Accordingly, image data stored in the removable medium 13 may be easily output (printed) by another apparatus having printing functions and an interface with the removable medium.

Also, image data processed into print data are reduced in size with respect to the pre-processed image data (e.g., the pre-processed data may be 8 bits whereas the processed data may be 2 bits). The data size of the processed image data may generally be determined by the formal printing capability of the relevant printer. It is noted that in certain preferred embodiments, the data size of the processed image data may be smaller than the data size enabled by the printing capability of the printer in order to decrease the memory capacity and reduce manufacturing costs.

For example, with respect to a printing capacity of 1200 dpi 2-bits, the memory may have only a capacity of 600 dpi 1-bit. In this case the printing resolution may be raised by increasing the memory capacity.

It is noted that in the examples illustrated in FIGS. 3A and 3B, image data are input from a scanner; however, the present invention is not limited to such an example, and image data may also be input from an external host apparatus and stored in a removable medium to be output.

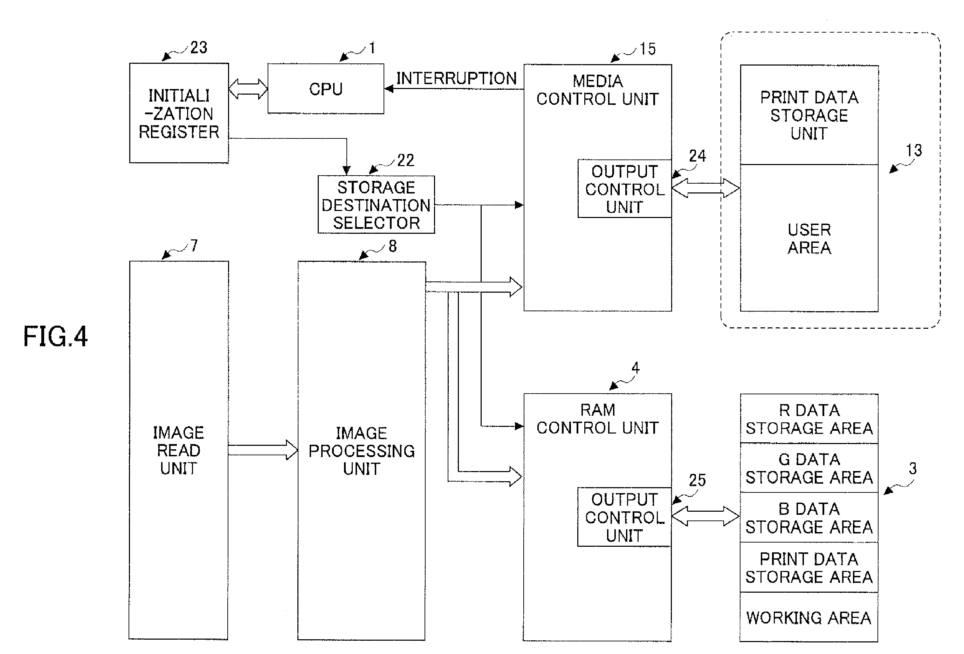

Also, it is noted that in the examples of FIGS. 3A and 3B, the removable medium 13 is used as the storage destination of image data. In one preferred embodiment, the storage destination of image data may be switched to the RAM 3, for example, as is described below with reference to FIG. 4.

FIG. 4 is a diagram showing a configuration for switching the storage destination of image data. It is noted that the configuration shown in FIG. 4 includes an initialization register 23 and a storage destination selector 22 in addition to components of FIG. 1 that are relevant to the present embodiment.

The initialization register 23 is configured to register information pertaining to whether the removable medium 13 is to be used as the storage destination of image data. It is noted that information may be registered in the initialization register 23 using the operations indicating unit 16, the external host apparatus 11, or some other initialization means of the image processing apparatus, for example.

The storage destination selector 22 is configured to output a signal for selecting whether to store image data output from the image processing unit 8 in the RAM 3 or the removable medium 13. Specifically, the signal output by the storage destination selector 22 induces one of an output control unit 24 arranged in the medium control unit 15 or an output control unit 25 arranged in the RAM control unit 4 to control write operations for writing the image data in the image buffer memory (i.e., removable medium 13 or RAM 3).

It is noted that the configuration of FIG. 4 merely illustrates one example of means for switching between writing data in the removable medium 13 and writing data in the RAM 3. That is, the present invention is not limited to such an example and other configurations may be used as well.

Also, according to the example of FIG. 4, the RAM 3 includes a R data storage area, a G data storage area, a B data storage area, a print data storage area and a working area. The R, G, and B data areas of the RAM 3 are for storing R, G, and B primary color data, respectively. The print data storage area is used to temporarily store image data to be printed by a printer as is described above. The working area is used to temporarily store programs.

Also, the removable medium 13 includes a print data storage area and a user area. The print data storage area is used to store image data to be printed by a printer. The user area may be arbitrarily used by a user.

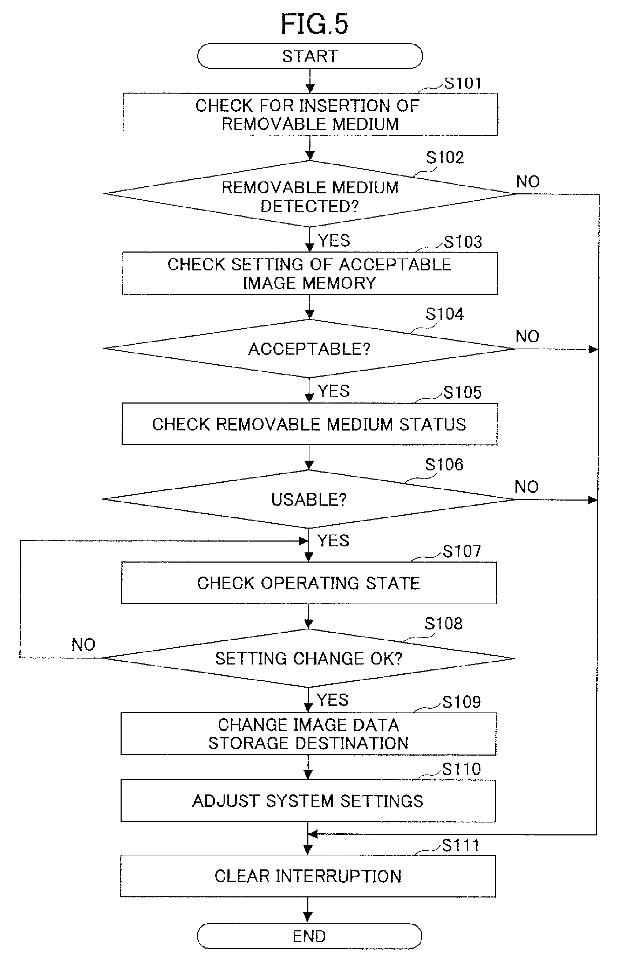

In the following, a process of detecting whether the removable medium 13 is connected to the image processing apparatus is described. FIG. 5 is a flowchart illustrating an interruption generating process executed by the medium control unit 15.

In step S101, the medium control unit 15 checks for insertion of a removable medium. In step S102, a determination is made as to whether a removable medium is detected. If no removable medium is detected, the process moves on to step S111 where the interruption is cleared.

In a case where a removable medium is detected, the process moves on to step S103 where image memory acceptance settings are checked. The checking involves referring to setting information to determine whether the inserted removable medium may be used as an image memory for storing image data within the present image processing apparatus.

If the removable medium is not acceptable as an image memory to be used in the present image processing apparatus, the process moves on to step S111. If the removable medium is determined to be acceptable as an image memory, the process moves on to step S105 where the status of the removable medium is checked. Specifically, the checking may primarily involve determining the capacity of the area within the removable medium that may be used as an image memory, for example. Based on the check results, a determination is made as to whether the removable medium may be used in step S106.

If the removable medium is determined to be unusable as the image memory, the process moves on to step S111. If the removable medium is determined to be usable, the operating state of the image processing apparatus is checked in step S107. The checking of the operating state involves determining whether image data are being input from an external host apparatus, internal processing is taking place, or image data are being output, for example.

The above checking is performed in order to determine whether the RAM is currently in use. If the RAM is not in use, the settings in the storage destination selector may be changed to enable use of the removable medium as the image memory. If the RAM is currently in use, changing the settings of the storage destination selector may be delayed until use of the RAM is ended.

However, in the case of waiting until the end of a current process, there is a possibility of the current process being aborted, for example. In this respect, a timeout duration may be set for the process in order to stop this operation at a suitable timing. Specifically, a standby flag may be used to indicate the timing for changing the settings in the storage destination selector, for example.

In step S108, a determination is made as to whether setting in the storage destination selector may be changed. If it is determined that the storage destination setting may be changed, the storage destination is changed from the RAM to the removable medium in step S109. In response to such a change, system settings may be changed as is necessary or desired in step S110.

It is noted that system settings that may be changed in response to the change in the storage destination may include settings pertaining to read/write timings of memory stages owing to differences in memory access times, for example.

Then, in step S111, the interruption is cleared and the process is ended.

It is noted that an image data input part according to an embodiment of the present invention may be the scanner engine 5, the image read unit 7, and the scanner control unit 6, for example. An image data input part according to another embodiment may be the host I/F control unit 12, for example. An image data output part according to an embodiment of the present invention may be the image processing unit 8, for example. An image data output part according to an embodiment of the present invention may be the printer control unit 18, the image write unit 20, and the printer engine 19, for example. An image data output part according to another embodiment may be the host I/F control unit 12, for example. A setting part according to an embodiment of the present invention may be the operations control unit 17, for example.

Also, an image data input step according to an embodiment of the present invention may be one of the processes executed by the scanner engine 5 in FIGS. 3A and 3B, for example. An image data storing step according to an embodiment of the present invention may be one of the processes executed by the medium control unit 15 in FIGS. 3A and 3B, for example. An image data output step according to an embodiment of the present invention may be one of the processes executed by the host I/F control unit 12 in FIGS. 3A and 3B, for example.

Although the present invention is shown and described with respect to certain preferred embodiments, it is obvious that equivalents and modifications will occur to others skilled in the art upon reading and understanding the specification. The present invention includes all such equivalents and modifications, and is limited only by the scope of the claims.

## Claims

1. An image processing apparatus having an interface with a removable medium, the apparatus **characterized by** comprising:
an image data input part configured to input image data;
an image processing part configured to process the input image data;
an image data storing part configured to store the processed image data in the removable medium; and
an image data output part configured to output the stored image data.

2. The image processing apparatus as claimed in claim 1, wherein
the image processing part is configured to process the input image data into print data.

3. The image processing apparatus as claimed in claim 1, wherein
the image data input part is a scanner.

4. The image processing apparatus as claimed in claim 1, wherein
the image data input part is an interface with an external host apparatus, and the image data are transmitted from the external host apparatus.

5. The image processing apparatus as claimed in claim 1, wherein
the image data output part is a printer.

6. The image processing apparatus as claimed in claim 1, wherein
the image data output part is an interface with an external host apparatus, and the image data are output to the external host apparatus.

7. The image processing apparatus as claimed in claim 1, further comprising:
a built-in storage part; and
a setting part configured to set information pertaining to whether the processed image data are to be stored in the removable medium or the built-in storage part.

8. An image processing method for processing image data in an image processing apparatus having an interface with a removable medium, the method **characterized by** comprising the steps of:
inputting the image data;
processing the input image data;
storing the processed image data in the removable medium; and
outputting the stored image data.

9. The image processing method as claimed in claim 8, wherein
the processing step includes processing the input image data into print data.

10. The image processing method as claimed in claim 8, wherein
the inputting step includes inputting the image data using a scanner.

11. The image processing method as claimed in claim 8, wherein
the image data are transmitted from an external host apparatus in the inputting step.

12. The image processing method as claimed in claim 8, wherein
the outputting step includes outputting the image data using a printer.

13. The image processing method as claimed in claim 8, wherein
the outputting step includes outputting the image data to an external host apparatus.

14. A computer-readable medium storing an image processing program to be executed by a computerized device included in an image processing apparatus having an interface with a removable medium, **characterized in that** the program is executed by the computerized device to perform the steps of:
inputting image data;
processing the input image data;
storing the processed image data in the removable medium; and
outputting the stored image data.
